# FASCICULE DE BREVET EUROPEEN

(11) **EP 2 132 467 B1**
(45) Date de publication et mention de la délivrance du brevet: **01.12.2010**
(21) Numéro de dépôt: 08762091.0
(22) Date de dépôt: 14.02.2008
(51) Int. Cl.: F16K 1/52

(54) **ROBINET POUR BOUTEILLE DE GAZ SOUS PRESSION**
HAHN FÜR EINEN UNTER DRUCK STEHENDEN GASZYLINDER
TAP FOR PRESSURISED GAS CYLINDER

(30) Priorité: 29.03.2007 FR 0754116
(43) Date de publication de la demande: 16.12.2009
(73) Titulaire: Air Liquide Medical Systems, 92182 Antony Cedex (FR)
(72) Inventeur: BLEYS, Christian, F-72330 Cerans-Foulletourte (FR); COLLADO, Pedro, F-77330 Ozoir La Ferrière (FR); PIN, Fabrice, F-78220 Viroflay (FR); DECK, Philippe, F-93100 Montreuil (FR)
(74) Mandataire: De Cuenca, Emmanuel Jaime
(86) Numéro de dépôt international: PCT/FR2008/050243
(87) Numéro de publication internationale: WO 2008/122727

(56) Documents cités:
- BE-A- 540 145
- US-A- 4 842 018
- US-A- 5 678 602

## Description

La présente invention concerne un robinet pour bouteille de gaz sous pression, comme révelé par exemple dans le document US 5 678 602.

L'invention concerne plus particulièrement un robinet pour bouteille de gaz sous pression comportant un corps destiné à être raccordé à un orifice de sortie de gaz d'une bouteille de gaz, un circuit de soutirage du gaz comprenant au moins une sortie de gaz, au moins un clapet mobile entre une position de fermeture du circuit et une position d'ouverture du circuit, au moins un élément de réglage du débit de libération du gaz, ainsi qu'un organe d'actionnement unique apte à coopérer aussi bien avec le clapet qu'avec l'élément de réglage de débit.

Il est connu dans l'art antérieur des robinets pour bouteille de gaz sous pression. Ces dispositifs comportent en règle générale un robinet de manoeuvre pour la sortie du gaz à haute pression et un robinet de manoeuvre pour régler le débit du gaz, en général détendu, vers la sortie. Ceci présente un inconvénient en particulier lors de l'utilisation dans le cadre d'urgences médicales. En effet, dans ce cas, l'utilisateur d'une bouteille d'oxygène équipée de deux robinets distincts, un pour la sortie du gaz à haute pression et un autre pour régler le débit de sortie du gaz détendu vers le patient, doit effectuer deux mouvements successifs, un premier pour ouvrir le premier robinet et un deuxième pour ouvrir le deuxième robinet. La difficulté est également présente lors de la fermeture des robinets. Ceci prend du temps et se fait au détriment du patient. De plus, les erreurs de manipulation sont alors fréquentes, car l'utilisateur peut facilement se tromper de robinet ou dans l'ordre d'ouverture des deux robinets.

Il est connu du document EP 1 327 804 un dispositif de robinet pour bouteille de gaz sous pression visant à résoudre ce problème. Ce dispositif comprend un volant dont l'actionnement en rotation permet de commander en deux temps successifs des moyens de commande de la fermeture de la vanne du robinet ou d'ouverture de la vanne du robinet pour libérer le gaz et des moyens de réglage du débit de la sortie du gaz libéré.

Ce dispositif ne pallie pas de façon satisfaisante les inconvénients relevés ci-dessus. En particulier cet agencement est source de méprises entre les états de fonctionnements que sont d'une part, l'ouverture de la vanne et d'autre part, le réglage du débit de gaz. L'utilisateur ne gagne que peu de temps en comparaison avec les autres dispositifs déjà connus et peut très fréquemment se tromper dans le sens de rotation du volant entraînant la fermeture de la vanne au lieu de son ouverture et vice versa, ce qui peut occasionner des conséquences dramatiques pour les patients. Ce dispositif ne permet donc pas d'effectuer des manoeuvres en toute sécurité dans les opérations d'urgence par exemple.

Un but de la présente invention est de pallier tout ou partie des inconvénients de l'art antérieur relevés ci-dessus.

A cette fin, un robinet selon l'invention, par ailleurs conforme à la définition générique qu'en donne le préambule ci-dessus, est essentiellement **caractérisé en ce que** l'organe d'actionnement est monté mobile relativement au corps selon deux types de mouvements distincts, ledit organe d'actionnement étant agencé relativement au clapet et à l'élément de réglage du débit de façon que les deux types de mouvements commandent respectivement d'une part le déplacement du clapet entre ses positions d'ouverture et de fermeture et, d'autre part l'élément de réglage du débit.

Par ailleurs, des modes de réalisation de l'invention peuvent comporter l'une ou plusieurs des caractéristiques suivantes :
- l'organe d'actionnement est monté mobile relativement au corps selon un premier mouvement de translation dans lequel il commande le déplacement du clapet entre ses positions d'ouverture et de fermeture et un second mouvement de rotation dans lequel il commande l'élément de réglage du débit,
- le robinet comporte un organe de verrouillage amovible de l'organe d'actionnement dans une position d'ouverture du clapet,
- le robinet comporte au moins un élément de rappel sollicitant par défaut le clapet vers sa position de fermeture,
- le circuit comporte une entrée haute pression destinée à être raccordée avec l'intérieur d'une bouteille de gaz sous pression et un détendeur haute pression situé entre le clapet et l'entrée haute pression,
- le robinet comporte un détendeur basse pression situé en aval du clapet, c'est à dire entre le clapet et au moins une sortie du circuit,
- le robinet comporte au moins une première sortie à débit de gaz régulé située en aval de l'élément de réglage du débit, et une deuxième sortie dite de pression située en amont de l'élément de réglage du débit et en aval du détendeur basse pression,
- la deuxième sortie comporte un clapet d'accès pour contrôler son ouverture et sa fermeture,
- l'élément de réglage de débit est solidaire de l'organe d'actionnement dans au moins un de ses deux types de mouvements relativement au corps,
- l'élément de réglage de débit est disposé entre le clapet et au moins une sortie, l'élément de réglage de débit comprenant une pluralité d'orifices de diamètre distinct correspondant respectivement à des débits prédéfinis,
- l'organe d'actionnement coopère avec le clapet par contact direct ou indirect lors de ses déplacements dans un de ses deux types de mouvements relativement au corps,
- le robinet comporte au moins un moyen de guidage tel qu'un système de butée coopérant avec l'organe d'actionnement pour empêcher le déplacement de ce dernier selon un second type de mouvement (rotation par exemple) lorsqu'il n'a pas été effectué au préalable un déplacement du premier type de mouvement (translation par exemple),
- le robinet comporte une soupape ou clapet de sécurité située en amont du clapet prévue pour libérer le gaz en cas de surpression ou température anormale,
- le clapet d'ouverture/fermeture du circuit est monté coulissant dans le corps,
- le robinet comporte un système de crantage coopérant avec l'organe d'actionnement pour former des positions stables ou points durs dans les mouvements correspondants à la commande du réglage du débit,
- le circuit C de gaz comporte un filtre situé dans un conduit de gaz en aval de l'entrée de gaz, en aval du filtre le circuit comporte plusieurs conduits, un premier conduit étant raccordable à un manomètre, un second étant raccordé à un orifice de remplissage et un troisième conduit formant un canal de libération du gaz, ouvert ou fermé par le clapet, vers au moins une sortie du robinet,
- le détendeur haute pression est situé entre le filtre et le clapet,
- le détendeur haute pression est conformé pour abaisser la pression du gaz d'une première pression à une deuxième pression, la première pression étant comprise, par exemple, entre 200 et 300 bars et la deuxième pression étant comprise, par exemple, entre 10 et 15 bars.

D'autres particularités et avantages apparaîtront à la lecture de la description ci-après, faite en référence aux figures dans lesquelles :
- la figure 1 représente schématiquement une vue en coupe d'un exemple de réalisation d'un robinet selon l'invention en position de fermeture de son clapet,
- la figure 2 représente schématiquement une vue en coupe d'un détail du robinet de la figure 1 dans une position d'ouverture de son clapet,
- la figure 3 est une vue de face de l'organe d'actionnement du robinet de la figure 1 en position de fermeture du clapet d'un robinet selon l'invention,
- la figure 4 est une vue de face du même organe d'actionnement dans une position d'ouverture du clapet du robinet et de non réglage d'un débit de sortie,
- la figure 5 est une vue de face du même organe d'actionnement dans une position d'ouverture du clapet du robinet et de réglage d'un débit de sortie,
- les figures 6 et 7 représentent schématiquement deux exemples d'application d'un robinet selon l'invention, dans lesquels l'organe d'actionnement coopère avec un carter de protection ou un chapeau de protection du robinet.

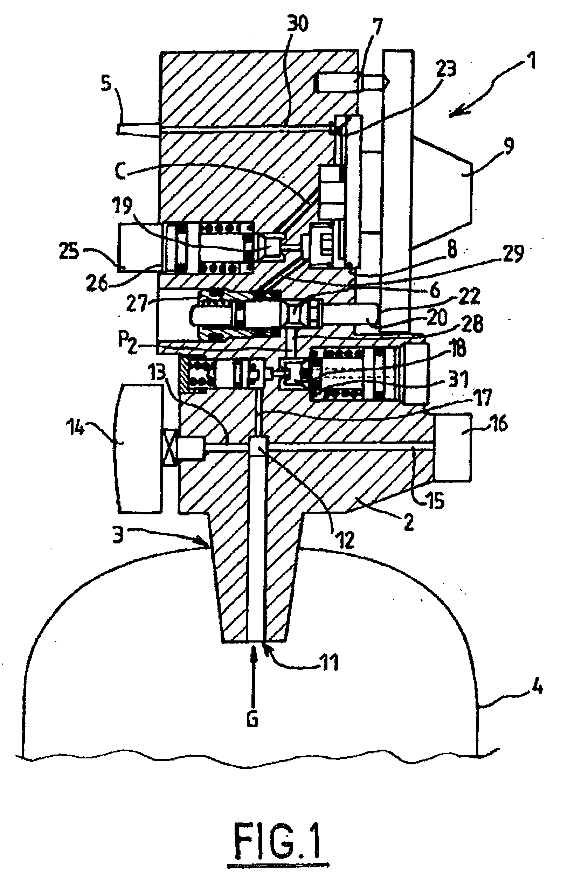

Le robinet 1 représenté sur la figure 1 comporte un corps 2 raccordé à un orifice 3 de sortie de gaz G d'une bouteille 4 de gaz.

Un circuit C de soutirage de gaz G est ménagé dans le corps 2 pour relier une entrée 11 de gaz G raccordée à l'intérieur de la bouteille 4 à au moins une sortie 5, 25 de libération de gaz. Comme représenté sur la figure 1, un filtre 12 peut être prévu en aval de l'entrée 11. En aval du filtre 12, le circuit C se subdivise en plusieurs conduits. Un premier conduit 13 communique avec un manomètre 14 monté sur le corps 2. Un second conduit 15 est raccordé à une prise de remplissage 16. Un troisième conduit 17 ou canal de libération achemine le gaz en direction d'une ou plusieurs sorties 5, 25. En aval du filtre 12, le conduit 17 de libération du circuit C comprend une soupape de sécurité 31 destinée à éviter de soumettre les éléments en aval à une pression importante si une fuite accidentelle survenait. De ce fait, la conception mécanique ci-dessus devient simple de réalisation et permet d'envisager des durées de vie sans maintenance équivalentes à celle d'un robinet simple, par exemple supérieures à dix ans.

En aval de la soupape de sécurité 31, le circuit C comprend un premier détendeur 18, dit « détendeur haute pression », prévu pour détendre le gaz à haute pression P1 de la bouteille 4, par exemple comprise entre 200 bars et 300 bars ou plus, à une pression P2 intermédiaire inférieure, par exemple comprise entre 10 bars et 15 bars environ.

En aval du détendeur haute pression 18, le circuit C comporte un clapet 6 d'ouverture/fermeture destiné à permettre ou non la libération de gaz à une sortie 5, 25 du robinet 1. Grâce à la présence de ce détendeur haute pression 18, tous les éléments situés en aval du clapet 6, y compris les éléments mobiles et les joints d'étanchéité présents dans le circuit C pour un bon fonctionnement du robinet, sont, selon l'invention, soumis à une pression relativement basse, inférieure ou égale à P2. Ces éléments sont donc soumis à des contraintes faibles tant en pression qu'en effort de frottement et ne sont ainsi pas sujet à une usure importante telle que l'on peut trouver pour des robinets de l'art antérieur.

Le clapet 6 est mobile, par exemple en translation, entre une position de fermeture 20 du circuit C et une position d'ouverture 21 du circuit C. Dans l'exemple de la figure 1, le circuit C est fermé, la position de fermeture du clapet 6 empêche la circulation du gaz dans le circuit C entre la portion amont 28 et la portion aval 29 au clapet 6.

Le robinet 1 peut aussi comporter un détendeur basse pression 19 situé en aval du clapet 6, c'est à dire entre le clapet 6 et au moins une sortie 5, 25 du circuit C. Ce détendeur basse pression permet une circulation du gaz en aval à une pression constante P3, la pression P3 étant, par exemple, comprise entre 1 et 5 bars. Ainsi, les éléments situés en aval du détendeur basse pression 19 ne sont plus soumis aux fluctuations de pression. La basse pression constante obtenue permet d'obtenir des débits stables au niveau des sorties 5 et 25 du robinet, ce qui facilite grandement l'utilisation d'un tel robinet et accroît sa sécurité ainsi que celle des patients ou utilisateurs.

Le robinet 1 comporte au moins un élément de réglage 23 du débit de libération du gaz G admis à une sortie 5, et un organe d'actionnement 9 unique apte à commander aussi bien le clapet 6 que l'élément de réglage 23 de débit.

L'organe d'actionnement 9 comprend par exemple un volant, monté mobile relativement au corps 2 est apte à commander lors de mouvements de translation le déplacement du clapet 6 entre ses positions d'ouverture 21 et de fermeture 20.

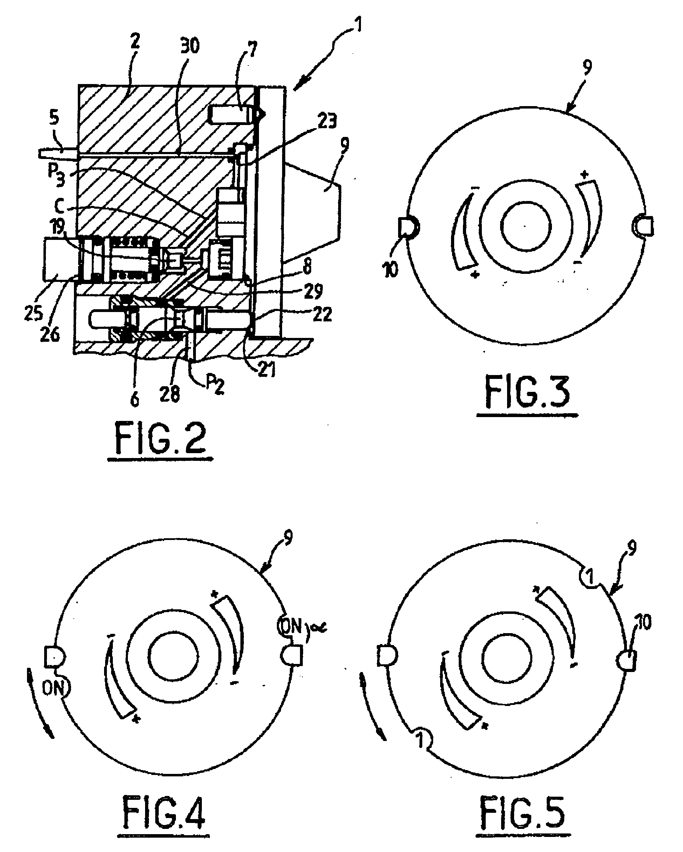

Sur la figure 2, l'utilisateur a imposé un mouvement de translation, en direction du corps 2, à l'organe d'actionnement 9. L'organe d'actionnement 9 est apte à déplacer le clapet 6 vers une position 21 d'ouverture, par contact entre une extrémité 22 du clapet 6 et l'organe d'actionnement 9. La position 21 d'ouverture du clapet 6 permet la libération du gaz dans le circuit C vers une sortie 5, 25.

De préférence, le clapet 6 est monté coulissant et sollicité par au moins un élément de rappel 27 vers sa position de fermeture 20. Une extrémité 22 du clapet 6 est maintenue en contact contre l'organe d'actionnement 9 par l'élément de rappel 27. De cette façon l'élément de rappel 27 applique une force sur l'organe d'actionnement 9 pour le pousser en translation vers l'extérieur du corps 2 afin de laisser le clapet 6 en position de fermeture 20 et d'assurer ainsi l'obturation par défaut du circuit C. Cette obturation par défaut est réalisée lorsque l'utilisateur n'a pas imposé de mouvement de translation, en direction du corps 2, à l'organe d'actionnement 9.

Une fois que le circuit C est ouvert, l'organe d'actionnement 9 est également apte à commander, lors de sa rotation, l'élément de réglage 23 du débit de sortie de gaz G.

Selon un mode de réalisation particulier de l'invention, le robinet 1 comporte au moins une première sortie 5 dite de débit située en aval de l'élément de réglage 23 du débit. Le robinet 1 comporte au moins une deuxième sortie 25 dite de pression située en amont de l'élément de réglage 23 du débit et en aval du détendeur basse pression 19. La deuxième sortie 25 peut comporter un clapet 26 pour son ouverture et sa fermeture apte à coopérer par exemple avec un raccord d'un appareil choisi. Ainsi l'utilisateur est libre de disposer de cette deuxième sortie 25 pour libérer du gaz G à basse pression vers un dispositif de son choix. Il s'agit d'un avantage certain du robinet selon l'invention. En effet, pour utiliser cette deuxième sortie 25, l'utilisateur n'a qu'à ouvrir le circuit C, en manoeuvrant l'organe d'actionnement 9 par un simple mouvement de translation de celui-ci vers le corps 2, suivi d'une rotation de quelques degrés seulement. D'autre part, l'utilisateur peut faire fonctionner les deux sorties 5 et 25 simultanément en continuant la rotation de l'organe d'actionnement 9, la sortie 5 de débit permettant une libération de gaz à débit choisi.

L'élément de réglage 23 comprend une portion 8, par exemple un disque, solidaire en rotation avec l'organe d'actionnement 9, disposée entre le clapet 6 et au moins une sortie 5 dite de débit. Le disque comprend une pluralité d'orifices de diamètres distincts correspondant respectivement à des débits prédéfinis. La rotation de l'organe d'actionnement 9 permet de fixer par coopération de la portion 8 avec l'élément de réglage 23, un des orifices en vis-à-vis d'une extrémité 30 du circuit C de libération de gaz G. Le débit est réglé par le diamètre de l'orifice choisi.

Le mécanisme ci-dessus présente un avantage considérable par rapport à l'art antérieur. En effet, pour ouvrir le circuit C et ainsi permettre la libre circulation du gaz G nécessaire pour son soutirage, l'utilisateur n'a qu'un effort très réduit et très facile de mise en oeuvre à produire : il lui suffit d'appuyer sur l'organe d'actionnement 9 provoquant un mouvement de translation entraînant le déplacement du clapet 6 vers sa position 21 d'ouverture. Ensuite, une rotation déterminée permet de verrouiller la position d'ouverture du clapet 6.

De plus, si l'utilisateur souhaite un débit de sortie de gaz G précis, par exemple pour un masque, celui-ci est disponible à la sortie 25 dite de pression.

Dans un deuxième temps l'utilisateur peut donc régler le débit de sortie de gaz qu'il désire, disponible à la sortie 5 dite de débit, par une simple rotation supplémentaire de l'organe d'actionnement 9. Ainsi, le risque d'erreurs quant à l'ouverture ou la fermeture du circuit C est très faible. De plus l'utilisateur est assuré que le circuit C est ouvert lorsqu'il règle le débit et de la même manière il est assuré que le circuit C est fermé lorsque le clapet 6 est en position 20 de fermeture.

Sur la figure 3, l'organe d'actionnement 9 est en position de repos, un organe de verrouillage 10, tel qu'un système de butée, bloque la rotation dudit organe d'actionnement 9 de sorte que le seul mouvement possible pour l'utilisateur est un mouvement de translation de l'organe 9 d'actionnement vers le corps 2.

Sur la figure 4, le circuit C est ouvert car le clapet 6 a été entraîné dans sa position d'ouverture 21 par la translation de l'organe d'actionnement 9 en contact avec l'extrémité 22 du clapet 6. La rotation de l'organe d'actionnement 9 est alors débloquée, ce qui a permis, sur la figure 4, à l'utilisateur de tourner l'organe d'actionnement 9 d'un premier angle α déterminé, lui permettant, par exemple, d'utiliser la sortie 25 dite de pression sans avoir à régler le débit de sortie de gaz G. De plus la rotation d'un premier angle α empêche le retour en position de fermeture 20 du clapet 6, car la translation du clapet 6 est bloquée par l'organe de verrouillage 10 par exemple une butée.

Sur la figure 5, l'utilisateur a choisi un débit et a donc imposé un mouvement de rotation supplémentaire à l'organe d'actionnement 9 pour que l'un des orifices de réglage de débit soit en vis-à-vis d'une extrémité 30 du circuit C de libération de gaz G. Le débit est réglé par le diamètre de l'orifice choisi, l'organe d'actionnement 9 est toujours bloqué en translation dans la position d'ouverture du clapet 6. Les positions des débits sélectionnés sont de préférence marquées par des points durs ou stables, par exemple un moyen 7 de bille et ressort contenu soit dans le corps 2 ou soit dans l'élément de réglage 23 et coopérant avec des logements sur l'organe d'actionnement 9.

Pour choisir un nouveau débit, l'utilisateur débloque l'organe d'actionnement 9 en lui imposant un effort suffisant pour l'entraîner en rotation et ainsi choisir de placer un autre orifice de diamètre différent en vis-à-vis d'une extrémité 30 du circuit C de libération de gaz G. Des repères alphanumériques sont de préférence prévus sur le corps 2 et/ou l'organe d'actionnement 9 pour signaler le débit choisi (0 : ouvert sans débit, 1 : premier débit, 2 : deuxième débit, etc...).

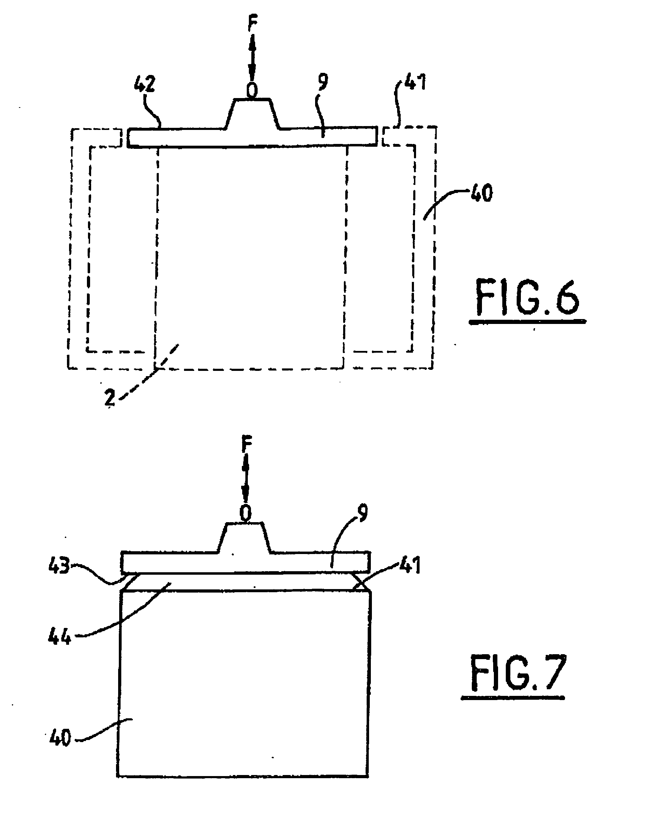

Sur la figure 6, un robinet 1 selon l'invention est représenté schématiquement par un rectangle en traits pointillés dans une position protégée par un chapeau ou un carter de protection 40 lui même représenté schématiquement en pointillés. Le robinet représenté à la figure 6 se distingue de celui décrit ci-dessus en ce que l'organe d'actionnement 9 est situé au niveau de la partie supérieure du corps 2 du robinet. Lorsque le robinet 1 est en position de fermeture F, l'organe d'actionnement fait saillie au dessus de l'extrémité 41 du chapeau ou du carter de protection 40. Lorsque l'utilisateur impose un mouvement de translation vers le corps 2 à l'organe d'actionnement 9 afin de placer le robinet 1 en position d'ouverture O, l'extrémité 42 de l'organe d'actionnement 9 se trouve au moins en partie sensiblement dans le même plan que celui de l'extrémité 41 supérieure du chapeau de protection 40. Des repères alphanumériques peuvent être présents sur le chapeau ou le carter de protection 40 ainsi que sur l'organe d'actionnement 9, afin d'indiquer les différentes positions du robinet (ouverture, fermeture, débit choisi).

Sur la figure 7, le robinet 1 conforme à la figure 6 est protégé par un autre chapeau ou carter de protection 40. Lorsque le robinet 1 est en position de fermeture F, l'organe d'actionnement 9 est dans une position d'éloignement maximal de l'extrémité 41 supérieure du chapeau de protection 40. Lorsque l'utilisateur impose un mouvement de translation vers le corps 2 à l'organe d'actionnement 9 afin de placer le robinet 1 en position d'ouverture O, l'extrémité 43 de l'organe d'actionnement 9 se trouve très proche, par exemple quasiment au contact, de l'extrémité 41 du chapeau de protection 40. Ce mode de réalisation de l'invention procure également l'avantage de permettre l'introduction, en plus des repères alphanumériques déjà mentionnés ci-dessus, un code de couleur permettant une meilleure visualisation des positions ouverture/fermeture du robinet. Par exemple, la zone de raccord 44 entre l'organe d'actionnement 9 et le chapeau ou le carter de protection 40 apparaît majoritairement d'une certaine couleur lorsque le robinet 1 est en position de fermeture F et d'une autre couleur lorsque le robinet 1 est en position d'ouverture O. La couleur des repères alphanumériques correspondant aux différentes positions d'ouverture O du robinet 1, de fermeture F du robinet 1 et de débit choisi peut également varier de la même manière.

La solution proposée définit donc une ergonomie permettant de visualiser sans équivoque la position d'ouverture du robinet 1 de manière claire et visible de loin.

Ce dernier point permet d'éviter les risques de manoeuvres involontaires du robinet 1, en effet s'il y a un changement de position du robinet 1, l'utilisateur sera visuellement bien informé.

Il doit être évident que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Robinet (1) pour bouteille de gaz sous pression comportant un corps (2) destiné à être raccordé à un orifice (3) de sortie de gaz (G) d'une bouteille (4) de gaz, un circuit (C) de soutirage du gaz (G) comprenant au moins une sortie (5, 25) de gaz, au moins un clapet (6) mobile entre une position de fermeture du circuit (C) et une position d'ouverture du circuit (C), au moins un élément de réglage (23) du débit de libération du gaz (G), ainsi qu'un organe d'actionnement unique (9) apte à coopérer aussi bien avec le clapet (6) qu'avec l'élément de réglage (23) de débit, **caractérisé en ce que** l'organe d'actionnement (9) est monté mobile relativement au corps (2) selon deux types de mouvements distincts, ledit organe d'actionnement (9) étant agencé relativement au clapet (6) et à l'élément de réglage (7) du débit de façon que les deux types de mouvements commandent respectivement d'une part le déplacement du clapet (6) entre ses positions d'ouverture et de fermeture et, d'autre part l'élément (23) de réglage du débit.

2. Robinet (1) selon la revendication 1 **caractérisé en ce que** l'organe d'actionnement (9) est monté mobile relativement au corps (2) selon un premier mouvement de translation dans lequel il commande le déplacement du clapet (6) entre ses positions d'ouverture et de fermeture et un second mouvement de rotation dans lequel il commande l'élément (23) de réglage du débit.

3. Robinet (1) selon l'une quelconque des revendications précédentes **caractérisé en ce que** qu'il comporte un organe de verrouillage (10) amovible de l'organe d'actionnement (9) dans une position d'ouverture du clapet (6).

4. Robinet (1) selon l'une quelconque des revendications précédentes **caractérisé en ce qu'**il comporte au moins un élément de rappel (27) sollicitant par défaut le clapet (6) vers sa position de fermeture.

5. Robinet (1) selon l'une quelconque des revendications précédentes **caractérisé en ce que** le circuit (C) comporte une entrée (11) haute pression destinée à être raccordée avec l'intérieur d'une bouteille (4) de gaz sous pression et un détendeur haute pression (18) situé entre le clapet (6) et l'entrée (11) haute pression.

6. Robinet (1) selon l'une quelconque des revendications précédentes **caractérisé en ce qu'**il comporte un détendeur basse pression (19) situé en aval du clapet (6), c'est à dire entre le clapet (6) et au moins une sortie (5, 25) du circuit.

7. Robinet (1) selon la revendication 6 **caractérisé en ce qu'**il comporte au moins une première sortie (5) à débit de gaz régulé située en aval de l'élément de réglage (23) du débit, et une deuxième sortie (25) dite de pression située en amont de l'élément de réglage (23) du débit et en aval du détendeur basse pression (19).

8. Robinet (1) selon la revendication 7 **caractérisé en ce que** la deuxième sortie (25) comporte un clapet (26) d'accès pour contrôler son ouverture et sa fermeture.

9. Robinet (1) selon l'une quelconque des revendications précédentes **caractérisé en ce que** l'élément de réglage (23) de débit est solidaire de l'organe d'actionnement (9) dans au moins un de ses deux types de mouvements relativement au corps (2).

10. Robinet (1) selon la revendication 9 **caractérisé en ce que** l'élément de réglage (23) de débit est disposée entre le clapet (6) et au moins une sortie (5), l'élément de réglage (23) de débit comprenant une pluralité d'orifices de diamètre distinct correspondant respectivement à des débits prédéfinis.

11. Robinet (1) selon l'une quelconque des revendications précédentes **caractérisé en ce que** l'organe d'actionnement (9) coopère avec le clapet (6) par contact direct ou indirect lors de ses déplacements dans un de ses deux types de mouvements relativement au corps (2).

12. Ensemble robinet (1) et chapeau ou carter de protection (40) pour bouteille de gaz sous pression **caractérisé en ce que** le robinet (1) est conforme à l'une quelconques des revendications précédentes et **en ce que** ledit robinet (1) est protégé par ledit chapeau ou carter de protection (40), l'organe d'actionnement (9) se déplaçant, selon le premier type de mouvement, entre une position d'éloignement maximal du chapeau ou du carter de protection (40), lorsque le robinet est en position de fermeture (F) et une position d'éloignement minimal du chapeau ou du carter de protection (40), lorsque le robinet (1) est en position d'ouverture (O).

## Claims

1. Tap (1) for a pressurized gas cylinder comprising a body (2) intended to be connected to an outlet orifice (3) collecting gas (G) out of a gas cylinder (4), a withdrawing circuit (C) for withdrawing the gas (G) comprising at least one gas outlet (5, 25), at least one valve shutter (6) able to move between a position in which it closes the circuit (C) and a position in which it opens the circuit (C), at least one regulating element (23) for regulating the flow rate at which the gas (2) is released, and a single actuating member (9) able to collaborate both with the valve shutter (6) and with the flow regulating element (23), **characterized in that** the actuating member (9) is mounted such that it can move relative to the body (2) in two different types of movement, said actuating member (9) being arranged relative to the valve shutter (6) and to the flow regulating element (7) in such a way that the two types of movement respectively on the one hand cause the valve shutter (6) to move between its open and closed position and, on the other hand, operate the flow regulating element (23).

2. Tap (1) according to Claim 1, **characterized in that** the actuating member (9) is mounted so that it can move relative to the body (2) in a translational first movement in which it causes the valve shutter (6) to move between its open and closed positions, and a rotational second movement in which it operates the flow regulating element (23).

3. Tap (1) according to either one of the preceding claims, **characterized in that** it comprises a removable locking member (10) that locks the actuating member (9) in a position in which the valve shutter (6) is open.

4. Tap (1) according to any one of the preceding claims, **characterized in that** it comprises at least one return element (27) which by default urges the valve shutter (6) toward its closed position.

5. Tap (1) according to any one of the preceding claims, **characterized in that** the circuit (C) comprises a high pressure inlet (11) intended to be connected with the inside of a pressurized gas cylinder (4) and a high pressure regulator (18) situated between the valve shutter (6) and the high pressure inlet (11).

6. Tap (1) according to any one of the preceding claims, **characterized in that** it comprises a low pressure regulator (19) situated downstream of the valve shutter (6), that is to say between the valve shutter (6) and at least one outlet (5, 25) of the circuit.

7. Tap (1) according to Claim 6, **characterized in that** it comprises at least one first outlet (5) with a regulated delivery of gas, situated downstream of the flow regulating element (23), and a second outlet (25) known as a pressure outlet, situated upstream of the flow regulating element (23) and downstream of the low pressure regulator (19).

8. Tap (1) according to Claim 7, **characterized in that** the second outlet (25) comprises an access valve shutter (26) for controlling the opening and closing thereof.

9. Tap (1) according to any one of the preceding claims, **characterized in that** the flow regulating element (23) moves as one with the actuating member (9) in at least one of its two types of movement relative to the body (2).

10. Tap (1) according to Claim 9, **characterized in that** the flow regulating element (23) is arranged between the valve shutter (6) and at least one outlet (5), the flow regulating element (23) comprising a plurality of orifices of different diameters each corresponding to a respective predefined delivery.

11. Tap (1) according to any one of the preceding claims, **characterized in that** the actuating member (9) collaborates with the valve shutter (9) by direct contact or indirect contact as it moves in one of its two types of movement relative to the body (2).

12. Assembly of a tap (1) and bonnet or protective cover (40) for a pressurized gas cylinder, **characterized in that** the tap (1) is a tap according to any one of the preceding claims, and **in that** said tap (1) is protected by said bonnet or protective cover (40), the actuating member (9) moving, in the first type of movement, between a position of maximum separation from the bonnet or protective cover (40), when the tap is in the closed position (F), and a position of minimum separation from the bonnet or protective cover (40) when the tap (1) is in the open position (O).

## Patentansprüche

1. Druckgasflaschenventil (1) mit einem Körper (2), der dazu bestimmt ist, mit einer Ausgangsöffnung (3) für Gas (G) aus einer Gasflasche (4) verbunden zu werden, einem Abziehkreislauf (C) für das Gas (G) mit mindestens einem Gasausgang (5, 25), mindestens einer Klappe (6), die zwischen einer Schließposition des Kreislaufs (C) und einer Öffnungsposition des Kreislaufs (C) beweglich ist, mindestens einem Element (23) zum Regeln der Freisetzungsdurchflussmenge des Gases (G), sowie einem einzigen Betätigungsglied (9), das geeignet ist, sowohl mit der Klappe (6) als auch mit dem Durchflussregelelement (23) zusammenzuwirken, **dadurch gekennzeichnet, dass** das Betätigungsglied (9) bezüglich des Körpers (2) nach zwei bestimmten Bewegungsarten beweglich montiert ist, wobei das Betätigungsglied (9) so bezüglich der Klappe (6) und des Durchflussregelelements (23) montiert ist, dass die beiden Bewegungsarten jeweils einerseits die Verschiebung der Klappe (6) zwischen ihrer Öffnungs- und Schließposition und andererseits das Durchflussregelelement (23) ansteuern.

2. Ventil (1) nach Anspruch 1, **dadurch gekennzeichnet, dass** das Betätigungsglied (9) bezüglich des Körpers (2) gemäß einer ersten Translationsbewegung beweglich montiert ist, bei der es die Verschiebung der Klappe (6) zwischen ihrer Öffnungs- und Schließposition ansteuert, sowie gemäß einer zweiten Drehbewegung, bei der es das Durchflussregelelement (23) ansteuert.

3. Ventil (1) nach einem der vorhergehenden Ansprüche, **dadurch gekennzeichnet, dass** es ein Verriegelungsglied (10) umfasst, das in einer Öffnungsposition der Klappe (6) vom Betätigungsglied (9) entfernbar ist.

4. Ventil (1) nach einem der vorhergehenden Ansprüche, **dadurch gekennzeichnet, dass** es mindestens ein Rückholelement (27) umfasst, das die Klappe (6) standardmäßig in ihre Schließposition drängt.

5. Ventil (1) nach einem der vorhergehenden Ansprüche, **dadurch gekennzeichnet, dass** der Kreislauf (C) einen Hochdruckeingang (11), der dazu bestimmt ist, mit dem Inneren einer Druckgasflasche (4) verbunden zu werden, und ein zwischen der Klappe (6) und dem Hochdruckeingang (11) angeordnetes Hochdruck-Druckminderventil (18) umfasst.

6. Ventil (1) nach einem der vorhergehenden Ansprüche, **dadurch gekennzeichnet, dass** es ein Niederdruck-Druckminderventil (19) umfasst, das der Klappe (6) nachgeordnet ist, d. h. zwischen der Klappe (6) und mindestens einem Ausgang (5, 25) des Kreislaufs angeordnet ist.

7. Ventil (1) nach Anspruch 6, **dadurch gekennzeichnet, dass** es mindestens einen ersten Ausgang (5) für eine geregelte Gasdurchflussmenge, der dem Durchflussregelelement (23) nachgeordnet ist, und einen zweiten so genannten Druckausgang (25) umfasst, der dem Durchflussregelelement (23) vor- und dem Niederdruck-Druckminderventil (19) nachgeordnet ist.

8. Ventil (1) nach Anspruch 7, **dadurch gekennzeichnet, dass** der zweite Ausgang (25) eine Zugangsklappe (26) zur Steuerung seines Öffnens und Schließens umfasst.

9. Ventil (1) nach einem der vorhergehenden Ansprüche, **dadurch gekennzeichnet, dass** das Durchflussregelelement (23) mit dem Betätigungsglied (9) bei mindestens einer seiner beiden Bewegungsarten bezüglich des Körpers (2) fest verbunden ist.

10. Ventil (1) nach Anspruch 9, **dadurch gekennzeichnet, dass** das Durchflussregelelement (23) zwischen der Klappe (6) und mindestens einem Ausgang (5) angeordnet ist, wobei das Durchflussregelelement (23) mehrere Öffnungen mit bestimmtem Durchmesser jeweils vorbestimmten Durchflussmengen entsprechend umfasst.

11. Ventil (1) nach einem der vorhergehenden Ansprüche, **dadurch gekennzeichnet, dass** das Betätigungsglied (9) während seiner Verschiebungen in einer seiner beiden Bewegungsarten bezüglich des Körpers (2) durch direkten oder indirekten Kontakt mit der Klappe (6) zusammenwirkt.

12. Anordnung aus Ventil (1) und Schutzkappe oder -gehäuse (40) für eine Druckgasflasche, **dadurch gekennzeichnet, dass** das Ventil (1) einem der vorhergehenden Ansprüche entspricht und dass das Ventil (1) durch die Schutzkappe bzw. das Schutzgehäuse (40) geschützt ist, wobei sich das Betätigungsglied (9) gemäß der ersten Bewegungsart zwischen einer maximalen Entfernungsposition von der Schutzkappe bzw. dem Schutzgehäuse (40), wenn das Ventil in der Schließposition (F) ist, und einer minimalen Entfernungsposition von der Schutzkappe bzw. dem Schutzgehäuse (40), wenn das Ventil (1) in der Öffnungsposition (O) ist, verschiebt.
